# EUROPÄISCHE PATENTSCHRIFT

(11) **EP 3 771 376 B1**
(45) Veröffentlichungstag und Bekanntmachung des Hinweises auf die Patenterteilung: **14.12.2022**
(21) Anmeldenummer: 20183681.4
(22) Anmeldetag: 02.07.2020
(51) Int. Cl.: A47J 43/046, A47J 43/07

(54) **ABFLUSSVORRICHTUNG FÜR EINE KÜCHENMASCHINE**
DRAINING DEVICE FOR A KITCHEN APPLIANCE
DISPOSITIF D'ÉCOULEMENT POUR UN ROBOT DE CUISINE

(30) Priorität: 30.07.2019 DE 102019211323
(43) Veröffentlichungstag der Anmeldung: 03.02.2021
(73) Patentinhaber: BSH Hausgeräte GmbH, 81739 München (DE)
(72) Erfinder: Berzelak, Matej, 3334 Luce (SI); Rudez, Darko, 3230 Sentjur (SI); Slatinsek, Blaz, 3342 Gornji Grad (SI); Potocnik, David, 3214 Zrece (SI)

(56) Entgegenhaltungen:
- EP-A1- 0 350 380
- EP-A1- 0 570 685

## Beschreibung

### Gebiet der Erfindung

Die Erfindung betrifft eine Abflussvorrichtung für eine Küchenmaschine sowie eine Küchenmaschine aufweisend eine solche Abflussvorrichtung.

### Hintergrund der Erfindung

Moderne Küchenmaschinen können neben Rühr-, Zerkleinerungs- und Knetfunktionen auch weitere Funktionen zur thermischen Zubereitung von Lebensmitteln, wie beispielsweise Kochen, Braten oder Garen aufweisen. Insbesondere beliebt sind dabei Küchenmaschinen, bei denen alle Schritte in ein und demselben Gefäß, meist einem Topf, durchgeführt werden können.

Problematisch ist hierbei allerdings, dass sich elektrische Bauteile in unmittelbarer Nähe von Flüssigkeiten, die verarbeitet werden, befinden.

Gelangen Flüssigkeiten an die elektrischen Bauteile in der Küchenmaschine kann dies zu Schädigungen beispielsweise durch Kurzschlüsse führen. Aber auch andere Bauteile innerhalb der Küchenmaschine können durch Flüssigkeiten geschädigt werden. Davon abgesehen handelt es sich bei den in der Küchenmaschine verarbeiteten Flüssigkeiten meist um Flüssigkeiten mit Lebensmittelanteilen, so dass auch das Vorhandensein derer, selbst lediglich innerhalb des Gehäuses der Küchenmaschine, nicht wünschenswert ist, da es zu Schimmel und der Bildung von unangenehmen Gerüchen kommen kann.

Küchenmaschinen sind daher so aufgebaut, dass die Stellen an denen Flüssigkeiten in das Gerät eindringen könnten, so gering wie möglich gehalten werden. Möglichkeiten dazu sind beispielsweise der Einsatz von durchgängigen Gehäusen oder das Abdichten mittels Dichtungen.

Es ist aber nicht immer möglich alle Stellen optimal abzudichten, eine Schwachstelle stellt beispielsweise der Getriebeausgang dar. Diese Stelle ist schwer abzudichten, da hier Bewegung stattfindet. Zudem befindet sich diese in den meisten Küchengeräten mit kombinierter Funktion unterhalb des Topfes, der
die Flüssigkeiten und Lebensmittel enthält. Gerade an dieser Stelle kann es also zu einem unerwünschten Eindringen von Flüssigkeiten in die Küchenmaschine kommen. Probleme können beispielsweise auftreten, wenn der Topf nicht richtig in die Küchenmaschine eingesetzt wird oder eine Dichtung undicht ist. Auch das Überkochen von Flüssigkeiten oder Speisen kann dazu führen, dass Flüssigkeiten aus dem Topf in die darunter befindliche Einsatzmulde der Küchenmaschine für den Topf gelangen und von dort in das Gehäuse.

Daher besitzen die meisten Vorrichtungen, die Flüssigkeiten enthalten bzw. verarbeiten, Sammelvorrichtungen für versehentlich an die falsche Stelle geratene Flüssigkeiten und Leitungswege, um diese auf dem schnellsten und sichersten Weg auszuleiten.

Gerade betreffend das Eindringen von Flüssigkeiten über den Getriebeausgang in der Topfeinsatzmulde bei Küchenmaschinen sind keine befriedigenden Möglichkeiten bekannt um entweder den Getriebeausgang zufriedenstellend abzudichten oder versehentlich dort eingetretene Flüssigkeiten ausreichend sauber, schnell und gefahrlos auszuleiten.

Aus der EP 0 570 685 A1 ist eine Küchenmaschine mit zwei in einer Achse gelagerten und mit unterschiedlichen Drehzahlen sich drehenden Abtriebswellen bekannt.

### Der Erfindung zugrundeliegende Aufgabe

Die Aufgabe der Erfindung ist es daher, eine verbesserte Abflussvorrichtung für eine Küchenmaschine zur Verfügung zu stellen, insbesondere eine Vorrichtung, die die Küchenmaschine vor dem Eintreten von Flüssigkeiten am Getriebeausgang der Topfeinsatzmulde schützt.

### Erfindungsgemäße Lösung

Die Bezugszeichen in sämtlichen Ansprüchen haben keine einschränkende Wirkung, sondern sollen lediglich deren Lesbarkeit verbessern.

Die erfindungsgemäße Aufgabe wird durch eine Abflussvorrichtung mit den Merkmalen des Anspruchs 1 sowie eine Küchenmaschine mit den Merkmalen des Anspruchs 6 gelöst.

Vorteilhafte Aus- und Weiterbildungen, welche einzeln oder in Kombination miteinander eingesetzt werden können, sind Gegenstand der abhängigen Ansprüche und der nachfolgenden Beschreibung.

Die Erfindung betrifft eine Abflussvorrichtung für eine Küchenmaschine aufweisend eine Getriebehohlwelle und eine Kupplung, wobei die Kupplung mit der Getriebehohlwelle verbunden ist und im eingebauten Zustand in die Küchenmaschine das Gehäuse der Küchenmaschine vom Getriebeausgang in der Topfeinsatzmulde bis zum Boden der Küchenmaschine zumindest teilweise durchspannt. Die Kupplung weist ebenfalls einen hohlen Innenraum auf, so dass die Getriebehohlwelle und die Kupplung im verbundenen Zustand einen durchgängigen Hohlraum bilden.

Grundlegende Idee der Erfindung ist es, zwei Dinge miteinander zu kombinieren, den Antrieb und die Abflussvorrichtung.

Als Getriebewelle wird erfindungsgemäß in dem Abschnitt der Küchenmaschine der unterhalb der Topfeinsatzmulde liegt, eine Hohlwelle verwendet. Diese ist mit einer Kupplung verbunden, die ebenfalls einen hohlen Innenraum aufweist.

Hohlwelle und Kupplung sind dergestalt aufeinander abgestimmt und miteinander verbunden, dass sich ein durchgängiger Hohlraum ergibt, durch den Flüssigkeit, welche durch den Getriebeausgang in der Topfeinsatzmulde in das Getriebe eintritt, abfließen kann ohne Schaden anzurichten. Dazu durchspannt die Abflussvorrichtung entweder das gesamte Gehäuse der Küchenmaschine oder einen Teil davon. Wird nur ein Teil durchspannt, ist unterhalb der Abflussvorrichtung eine Öffnung in der Küchenmaschine vorgesehen, durch die die Flüssigkeit austreten kann.

Gleichzeitig ist die Hohlwelle in der Lage, ihre Funktion als Getriebeeinheit zu erfüllen, da sich in ihrem Hohlraum keine Elemente befinden, die durch Flüssigkeit geschädigt werden könnten.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

In einer Ausführungsform der Erfindung ist daher die Abflussvorrichtung als funktionsfähige Antriebseinheit mit der Antriebseinheit im Gartopf verbindbar.

In einer bevorzugten Ausführungsform der Erfindung ist die Kupplung und die Getriebehohlwelle an den Seiten von einem Gehäuse umgeben. Dabei kann das Gehäuse die Abflussvorrichtung aus Kupplung und Getriebehohlwelle überragen und bildet damit im eingebauten Zustand einen Teil des Abflusses durch die Küchenmaschine von der Topfeinsatzmulde bis zum Boden.

In der erfindungsgemäßen Abflussvorrichtung kommt der Kupplung unter anderem die Funktion als Sammelbecken für eventuell ausgetretene Flüssigkeiten zu. Dazu kann die Kupplung an der von der Verbindungsseite für die Getriebehohlwelle abgewandten Seite beckenartig ausgebildet sein. Hierbei können die Ränder verschiedenartig geformt sein, je nachdem ob viel Wasser aufgenommen werden soll oder es im Vordergrund steht, dass sich sämtliches Wasser möglichst schnell in der Kupplung sammeln soll.

In einer Variante kann die Kupplung durchgehende Rillen am Rand der von der Verbindungsseite für die Getriebehohlwelle abgewandten Seite aufweisen. Durch diese Rillen kann überkochende oder anderweitig verschüttete Flüssigkeit aus der Topfeinsatzmulde bereits dann ablaufen, wenn der Gartopf bei intakten Sicherungen noch korrekt eingesetzt ist.

Zu der erfindungsgemäßen Abflussvorrichtung korrespondiert eine Küchenmaschine aufweisend eine solche Abflussvorrichtung. Dazu ist in der Küchenmaschine eine durchgehende Öffnung vom Boden bis zum Getriebeausgang der Topfeinsatzmulde angeordnet, in die die Abflussvorrichtung einführbar ist und wobei diese Abflussvorrichtung gleichzeitig eine Antriebseinheit der Küchenmaschine darstellt.

In der erfindungsgemäßen Küchenmaschine ist die Abflussvorrichtung im eingebauten Zustand dergestalt in der Öffnung angeordnet, dass sich ein durchgängiger, an den Seiten wasserundurchlässiger Hohlgang von dem Getriebeausgang bis zum Boden ergibt. Das bedeutet, dass Flüssigkeit durch den Hohlgang zwar die Küchenmaschine passieren, aber nicht seitlich aus diesem in das Gehäuse der Küchenmaschine eintreten kann.

Vorteilhafterweise können die Ränder der Abflussvorrichtung am Getriebeausgang direkt mit dem Boden der Topfeinsatzmulde verbunden sein. Eine weitere Möglichkeit ist, dass die Ränder der Öffnungen an der Topfeinsatzmulde die Ränder der Kupplung überragen oder entsprechend geformt und an diese angepasst sind. Wesentlich ist, dass eine glatte einheitliche Fläche entsteht, die Flüssigkeiten daran hindert in das Gehäuse der Küchenmaschine einzutreten.

In einer Ausführungsform der Küchenmaschine ist die Abflussvorrichtung dergestalt in die Öffnung eingebaut, dass sie die tiefste Stelle am Boden der Topfeinsatzmulde darstellt. Dies dient dazu sicherzustellen, dass sich das Wasser auch wirklich an dieser Stelle sammelt.

Zum Erreichen dieses Effekts kann die Küchenmaschine aber auch dergestalt ausgebildet sein, dass die Topfeinsatzmulde in Richtung Abflussvorrichtung abgesenkt ist, so dass ebenfalls die Abflussvorrichtung die tiefste Stelle am Boden der Topfeinsatzmulde darstellt.

Andere Ausgestaltungen der Topfeinsatzmulde sind ebenfalls möglich.

Die Vorteile der erfindungsgemäßen Abflussvorrichtung liegen auf der Hand.

Die erfindungsgemäße Abflussvorrichtung ist stabil und vermeidet lange Wege, bei denen sich Schmutz und Reste festsetzen könnten.

Ein weiterer Vorteil ist, dass die Topfeinsatzmulde problemlos mit Spülwasser oder Ähnlichem gereinigt werden kann, welches durch die Abflussvorrichtung problemlos aus der Küchenmaschine herauslaufen kann. Durch den geraden Verlauf der Abflussvorrichtung und die gute Zugänglichkeit, können festgesetzte Reste einfach entfernt werden.

Durch den doppelten Einsatz der Getriebewelle und Kupplung kann auf komplizierte Ausleitungswege für Flüssigkeiten und auf aufwendige Dichtungen an dieser Stelle verzichtet werden.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt:
- Fig. 1: eine Skizze der erfindungsgemäßen Küchenmaschine in einer perspektivischen Ansicht von schräg vorne und schräg oben mit eingesetztem Gartopf,
- Fig. 2: die Küchenmaschine aus Figur 1, ohne eingesetzten Gartopf
- Fig. 3: einen senkrechten Schnitt durch die erfindungsgemäße Küchenmaschine mit der Abflussvorrichtung mit eingesetztem Gartopf von der Seite.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

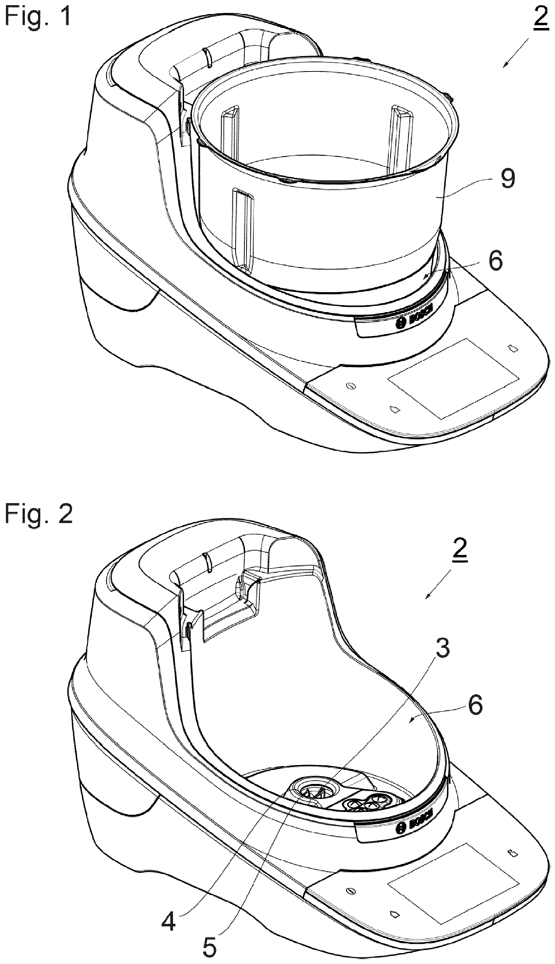

In **Figur 1** ist eine Skizze der erfindungsgemäßen Küchenmaschine 2 in einer perspektivischen Ansicht von schräg vorne und schräg oben mit aufgesetztem Gartopf 9 dargestellt. Der Gartopf 9 sitzt passgenau in der Topfeinsatzmulde 6.

**Figur 2** zeigt die Küchenmaschine aus Figur 1 ohne den eingesetzten Gartopf. Somit wird der Getriebeausgang 5 sichtbar, an dem sich die Kupplung 4 befindet, die auch als Sammelbecken für ausgetretene Flüssigkeiten in der Topfeinsatzmulde 6 dient. Die Getriebehohlwelle 3 ist unterhalb der Kupplung angeordnet und ermöglicht den Abfluss der in der Kupplung angesammelten Flüssigkeit durch ihren hohlen Innenraum. Die erfindungsgemäße Abflussvorrichtung wird durch den eingezeichneten Pfeil angezeigt. Der Boden der Topfeinsatzmulde 3 ist in der abgebildeten Ausführungsform uneben gezeigt, die Kupplung 4 am Getriebeausgang 5 zeigt erhöhte Ränder, so kann einerseits die auszuleitende Flüssigkeit besser gesammelt werden andererseits ist die Verbindung mit der Antriebseinheit 8 des Gartopfes 9 so besser zu realisieren.

Eine weitere Erhöhung in der Oberfläche der Topfeinsatzmulde 6 ist abgebildet, welche aus dem Vorhandensein darunter angeordneter technischer Elemente resultiert.

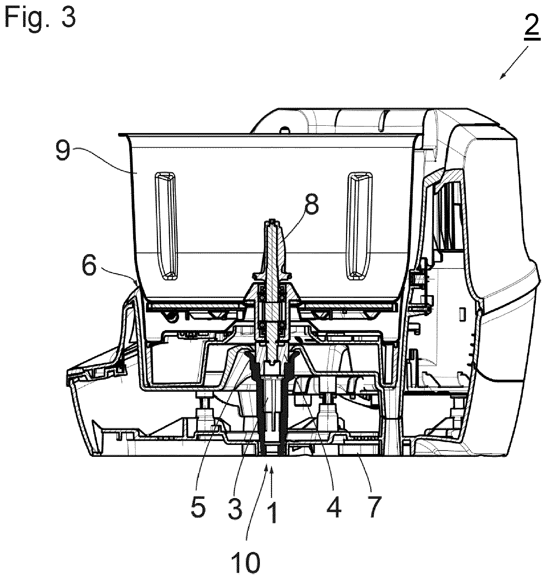

In **Figur 3** ist ein senkrechter Schnitt durch die erfindungsgemäße Küchenmaschine 2 mit der Abflussvorrichtung 1 mit eingesetztem Gartopf 9 von der Seite dargestellt. Hier ist die eingebaute Abflussvorrichtung 1 mit Hohlwelle 3 und Kupplung 4 am Getriebeausgang 5 dargestellt. Es ist gut ersichtlich wie die Abflussvorrichtung 1 mit der Antriebseinheit 8 des eingesetzten Gartopfes 9 verbunden ist. Es können somit zwei Funktionen mit der Hohlwelle 3 und der Kupplung 4 ausgeführt werden. Über die Verbindung der Antriebseinheiten wird der Gartopf 9 zusätzlich fixiert. Am Boden des Gartopfes 9 kann es beispielsweise zu Lecks in der Dichtung kommen, so dass Flüssigkeit in die Topfeinsatzmulde 6 bzw. direkt in die Abflussvorrichtung 1 austritt. Durch Überkochen kann ebenfalls Flüssigkeit in die Topfeinsatzmulde 6 gelangen. Die Abflussvorrichtung 1 ist in der Abbildung in ein Gehäuse 11 eingebettet, dass in die Öffnung 10 der Küchenmaschine 2 eingepasst ist und die Küchenmaschine 2 von der Topfeinsatzmulde 6 bis zum Boden 7 durchspannt. Am Boden 7 ist die Abflussvorrichtung 1 ebenfalls geöffnet, so dass das auszuleitende Wasser am Boden 7 der Küchenmaschine 2 aus der Abflussvorrichtung 1 austreten kann.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

Die Abflussvorrichtung schützt die Küchenmaschine vor dem Eintreten von Flüssigkeiten am Getriebeausgang der Topfeinsatzmulde.

Die in der vorstehenden Beschreibung, den Ansprüchen und den Zeichnungen offenbarten Merkmale können sowohl einzeln als auch in beliebiger Kombination, solange sie in den Umfang der Ansprüche fallen, für die Verwirklichung der Erfindung in ihren verschiedenen Ausführungsformen von Bedeutung sein.

**BEZUGSZEICHENLISTE**

| | | | |
|---|---|---|---|
| 1 | Abflussvorrichtung | 7 | Boden |
| 2 | Küchenmaschine | 8 | Antriebseinheit |
| 3 | Getriebehohlwelle | 9 | Gartopf |
| 4 | Kupplung | 10 | Öffnung |
| 5 | Getriebeausgang | 11 | Gehäuse |
| 6 | Topfeinsatzmulde | | |

## Patentansprüche

1. Abflussvorrichtung (1) für eine Küchenmaschine (2) aufweisend
- eine Getriebehohlwelle (3),
- eine Kupplung (4),
wobei die Kupplung (4) mit der Getriebehohlwelle (3) verbunden ist und im eingebauten Zustand das Gehäuse der Küchenmaschine (2) vom Getriebeausgang (5) in der Topfeinsatzmulde (6) bis zum Boden (7) der Küchenmaschine (2) zumindest teilweise durchspannt,
wobei die Kupplung (4) einen hohlen Innenraum aufweist,
**dadurch gekennzeichnet, dass**
die Getriebehohlwelle (3) und die Kupplung (4) im verbundenen Zustand einen durchgängigen Hohlraum bilden, durch den durch den Getriebeausgang (5) eintretende Flüssigkeit abfließen kann.

2. Abflussvorrichtung nach Anspruch 1,
**dadurch gekennzeichnet, dass**
diese als funktionsfähige Antriebseinheit mit der Antriebseinheit (8) im Gartopf (9) verbindbar ist.

3. Abflussvorrichtung nach einem der Ansprüche 1 oder 2,
**dadurch gekennzeichnet, dass**
die Kupplung (4) und die Getriebehohlwelle (3) an den Seiten von einem Gehäuse (11) umgeben sind.

4. Abflussvorrichtung nach einem der Ansprüche 1 bis 3,
**dadurch gekennzeichnet, dass**
die Kupplung (4) an der von der Verbindungsseite für die Getriebehohlwelle (3) abgewandten Seite beckenartig ausgebildet ist.

5. Abflussvorrichtung nach einem der Ansprüche 1 bis 4,
**dadurch gekennzeichnet, dass**
die Kupplung (4) durchgehende Rillen am Rand der von der Verbindungsseite für die Getriebehohlwelle (3) abgewandten Seite aufweist.

6. Küchenmaschine (2) aufweisend eine Abflussvorrichtung (1) nach einem der Ansprüche 1 bis 5.

7. Küchenmaschine nach Anspruch 6,
**dadurch gekennzeichnet, dass**
die Abflussvorrichtung (1) im eingebauten Zustand dergestalt in der Öffnung (10) angeordnet ist, dass sich ein durchgängiger, an den Seiten wasserundurchlässiger Hohlgang von dem Getriebeausgang (5) bis zum Boden (7) ergibt.

8. Küchenmaschine nach einem der Ansprüche 6 oder 7,
**dadurch gekennzeichnet, dass**
die Ränder der Abflussvorrichtung (1) am Getriebeausgang (5) direkt mit dem Boden der Topfeinsatzmulde (6) verbunden sind.

9. Küchenmaschine nach einem der Ansprüche 6 bis 8,
**dadurch gekennzeichnet, dass**
die Abflussvorrichtung (1) dergestalt in die Öffnung (10) eingebaut ist, dass sie die tiefste Stelle am Boden der Topfeinsatzmulde (6) darstellt.

10. Küchenmaschine nach einem der Ansprüche 6 bis 9,
**dadurch gekennzeichnet, dass**
die Topfeinsatzmulde (6) in Richtung Abflussvorrichtung (1) abgesenkt ist, so dass die Abflussvorrichtung (1) die tiefste Stelle am Boden der Topfeinsatzmulde (6) darstellt.

## Claims

1. Draining device (1) for a kitchen appliance (2), having
- a hollow drive shaft (3),
- a coupling (4),
wherein the coupling (4) is connected to the hollow drive shaft (3) and in the integrated state the housing of the kitchen appliance (2) traverses at least partially from the drive output (5) in the pot recess (6) as far as the base (7) of the kitchen appliance (2),
wherein the coupling (4) has a hollow interior space,
**characterised in that**
in the connected state the hollow drive shaft (3) and the coupling (4) form a continuous cavity through which liquid entering through the drive output (5) can drain.

2. Draining device according to claim 1,
**characterised in that**
this can be connected to the drive unit (8) in the cooking pot (9) as a functional drive unit.

3. Draining device according to one of claims 1 or 2,
**characterised in that**
the coupling (4) and the hollow drive shaft (3) are surrounded at the sides by a housing (11).

4. Draining device according to one of claims 1 to 3,
**characterised in that**
the coupling (4) is embodied in a bowl-type manner on the side facing away from the connecting side for the hollow drive shaft (3).

5. Draining device according to one of claims 1 to 4,
**characterised in that**
the coupling (4) has continuous grooves on the edge of the side facing away from the connecting side for the hollow drive shaft (3).

6. Kitchen appliance (2) having a draining device (1) according to one of claims 1 to 5.

7. Kitchen appliance according to claim 6,
**characterised in that**
in the integrated state the draining device (1) is arranged in the opening (10) in such a way that a continuous hollow passage which is watertight on the sides is produced from the drive output (5) to the base (7).

8. Kitchen appliance according to one of claims 6 or 7,
**characterised in that**
the edges of the draining device (1) at the drive output (5) are connected directly to the base of the pot recess (6).

9. Kitchen appliance according to one of claims 6 to 8,
**characterised in that**
the draining device (1) is integrated into the opening (10) in such a way that it shows the lowermost point at the base of the pot recess (6).

10. Kitchen appliance according to one of claims 6 to 9,
**characterised in that**
the pot recess (6) is lowered in the direction of the draining device (1) so that the draining device (1) represents the lowermost point at the base of the pot recess (6).

## Revendications

1. Dispositif d'écoulement (1) pour un robot de cuisine (2) présentant
- un arbre de transmission creux (3),
- un accouplement (4),
dans lequel l'accouplement (4) est relié à l'arbre de transmission creux (3) et parcourt, à l'état monté, au moins en partie la carcasse du robot de cuisine (2) de la sortie de transmission (5) dans l'auge à accessoires (6) jusqu'au fond (7) du robot (2), dans lequel l'accouplement (4) présente un espace intérieur creux,
**caractérisé en ce que**
l'arbre de transmission creux (3) et l'accouplement (4) forment à l'état relié une cavité continue, à travers laquelle un fluide qui pénètre à travers la sortie de transmission (5) peut s'écouler.

2. Dispositif d'écoulement selon la revendication 1, **caractérisé en ce que** celui-ci peut être relié sous forme d'unité d'entraînement fonctionnelle à l'unité d'entraînement (8) dans le pot de cuisson (9).

3. Dispositif d'écoulement selon l'une des revendications 1 ou 2, **caractérisé en ce que** l'accouplement (4) et l'arbre de transmission creux (3) sont entourés latéralement par une carcasse (11).

4. Dispositif d'écoulement selon l'une des revendications 1 à 3, **caractérisé en ce que** l'accouplement (4) est formé en forme de cuvette sur le côté éloigné du côté de raccordement pour l'arbre de transmission creux (3).

5. Dispositif d'écoulement selon l'une des revendications 1 à 4, **caractérisé en ce que** l'accouplement (4) présente des encoches continues sur le bord du côté éloigné du côté de raccordement pour l'arbre de transmission creux (3).

6. Robot de cuisine (2) présentant un dispositif d'écoulement (1) selon l'une des revendications 1 à 5.

7. Robot de cuisine selon la revendication 6, **caractérisé en ce que** le dispositif d'écoulement (1) est, à l'état monté, disposé de telle façon dans l'orifice (10) qu'une galerie continue aux côtés étanches se forme de la sortie de transmission (5) jusqu'au fond (7).

8. Robot de cuisine selon l'une des revendications 6 ou 7, **caractérisé en ce que** les bords du dispositif d'écoulement (1) sont directement reliés au fond de l'auge à accessoires (6) au niveau de la sortie de transmission (5).

9. Robot de cuisine selon l'une des revendications 6 à 8, **caractérisé en ce que** le dispositif d'écoulement (1) est intégré de telle sorte à l'orifice (10) qu'il représente le point le plus bas au niveau du fond de l'auge à accessoires (6).

10. Robot de cuisine selon l'une des revendications 6 à 9, **caractérisé en ce que** l'auge à accessoires (6) est abaissée en direction du dispositif d'écoulement (1), de sorte que le dispositif d'écoulement (1) représente le point le plus bas au niveau du fond de l'auge à accessoires (6).
